# EUROPÄISCHE PATENTANMELDUNG

(11) **EP 2 204 424 A1**
(43) Veröffentlichungstag der Anmeldung: **07.07.2010**
(21) Anmeldenummer: 10156088.6
(22) Anmeldetag: 23.02.2006
(51) Int. Cl.: C09D 169/00, C08G 64/42

(54) **Hochfunktionelle, Hoch- oder Hyperverzweigte Polycarbonate sowie deren Herstellung und Verwendung**

(30) Priorität: 25.02.2005 DE 102005009166
(62) Teilanmeldung aus: 06708492.1
(71) Anmelder: BASF SE, 67056 Ludwigshafen (DE)
(72) Erfinder: Bruchmann, Bernd, 67251, Freinsheim (DE); Schäfer, Harald, 68219, Mannheim (DE)

(57) **Zusammenfassung**

Hochfunktionelle, hoch- oder hyperverzweigte Polycarbonate auf Basis von Dialkyl- oder Diarylcarbonaten oder Phosgen, Diphosgen oder Triphosgen und aliphatischen, aliphatisch/aromatischen und aromatischen Di- oder Polyolen sowie ihre Verwendung zur Herstellung von Lacksystemen.

## Beschreibung

Die vorliegende Erfindung betrifft hochfunktionelle, hoch- oder hyperverzweigte Polycarbonate auf Basis von Dialkyl- oder Diarylcarbonaten oder Phosgen, Diphosgen oder Triphosgen und aliphatischen, aliphatisch/aromatischen oder aromatischen Di- oder Polyolen sowie ihre Verwendung zur Herstellung von Lacksystemen.

Die erfindungsgemäßen hochfunktionellen, hoch- oder hyperverzweigten Polycarbonate können u.a. als Haftvermittler, Thixotropiermittel, Fließverbesserer oder als Bausteine zur Herstellung von Polyadditions- oder Polykondensationspolymeren, zum Beispiel von Lacken, Überzügen, Klebstoffen, Dichtmassen, Giesselastomeren oder Schaumstoffen technisch vorteilhaft eingesetzt werden.

Polycarbonate werden üblicherweise aus der Reaktion von Alkoholen oder Phenolen mit Phosgen oder aus der Umesterung von Alkoholen oder Phenolen mit Dialkyl- oder Diarylcarbonaten erhalten. Technisch bedeutend sind aromatische Polycarbonate, die zum Beispiel aus Bisphenolen hergestellt werden; aliphatische Polycarbonate spielen vom Marktvolumen her gesehen bisher eine untergeordnete Rolle. Siehe dazu auch Becker/Braun, Kunststoff-Handbuch Bd. 3/1, Polycarbonate, Polyacetale, Polyester, Celluloseester, Carl-Hanser-Verlag, München 1992, Seiten 118 - 119, und "Ullmann's Encyclopedia of Industrial Chemistry", 6th Edition, 2000 Electronic Release, Verlag Wiley-VCH.

Die in der Literatur beschriebenen aromatischen oder aliphatischen Polycarbonate sind in der Regel linear oder mit einem lediglich geringen Verzweigungsgrad aufgebaut.

So beschreibt die US 3,305,605 die Verwendung fester linearer aliphatischer Polycarbonate mit einer Molmasse oberhalb 15000 Da als Weichmacher für Polyvinylpolymere.

Die US 4,255,301 beschreibt lineare cycloaliphatische Polycarbonate als Lichtstabilisatoren für Polyester.

Lineare aliphatische Polycarbonate werden weiterhin bevorzugt zur Herstellung thermoplastischer Kunststoffe, zum Beispiel für Polyester oder für Polyurethan- oder Polyharnstoffurethan-Elastomere, verwendet, siehe dazu auch EP 364052, EP 292772, EP 1018504 oder DE 10130882. Kennzeichnend für diese linearen Polycarbonate ist allgemein deren hohe Eigenviskosität.

EP-A 896 013 offenbart vernetzte Polycarbonate, welche durch Umsetzung von Gemischen aus Diolen und Polyolen mit mindestens 3 OH-Gruppen mit organischen Carbonaten, Phosgenen oder Derivaten davon erhältlich sind. Bevorzugt werden mindestens 40 % des Diols eingesetzt. Die Schrift enthält keinerlei Hinweise darauf, wie man ausgehend von den genannten Ausgangsprodukten auch unvernetzte, hyperverzweigte Polycarbonate herstellen könnte.

Definiert aufgebaute, hochfunktionelle Polycarbonate sind erst seit kurzer Zeit bekannt.

S. P. Rannard und N. J. Davis, J. Am. Chem. Soc. 2000, 122, 11729, beschreiben die Herstellung von perfekt verzweigten dendrimeren Polycarbonaten durch Reaktion von Carbonylbisimidazol als Phosgen-analoger Verbindung mit Bis-hydroxyethylamino-2-propanol.

Synthesen zu perfekten Dendrimeren sind vielstufig, daher kostenintensiv und für die Übertragung in einen industriellen Maßstab somit ungeeignet.

D.H. Bolton und K. L. Wooley, Macromolecules 1997, 30, 1890, beschreiben die Herstellung von hochmolekularen, sehr starren hyperverzweigten aromatischen Polycarbonaten durch Umsetzung von 1,1,1-Tris(4'-hydroxyphenyl)ethan mit Carbonylbisimidazol.

Hyperverzweigte Polycarbonate lassen sich auch gemäß WO 98/50453 herstellen. Nach dem dort beschriebenen Verfahren werden Triole wiederum mit Carbonylbisimidazol umgesetzt. Es entstehen zunächst Imidazolide, die dann intermolekular zu den Polycarbonaten weiterreagieren. Nach der genannten Methode fallen die Polycarbonate als farblose oder blassgelbe gummiartige Produkte an.

Scheel und Mitarbeiter, Macromol. Symp. 2004, 120, 101, beschreiben die Herstellung von Polycarbonaten auf Basis von Triethanolamin und Carbonylbisimidazol, die jedoch zu thermolabilen Produkten führt.

Die genannten Synthesen zu hoch- oder hyperverzweigten Polycarbonaten weisen folgende Nachteile auf:
a) die hyperverzweigten Produkte sind entweder hochschmelzend, gummiartig oder thermisch labil, dadurch wird eine spätere Verarbeitbarkeit deutlich eingeschränkt.
b) während der Reaktion freiwerdendes Imidazol muß aufwändig aus dem Reaktionsgemisch entfernt werden.
c) die Reaktionsprodukte enthalten immer terminale Imidazolid-Gruppen. Diese Gruppen sind labil und müssen über einen Folgeschritt z.B. in Hydroxylgruppen umgewandelt werden.
d) Carbonyldiimidazol ist eine vergleichsweise teure Chemikalie, die die Einsatzstoffkosten stark erhöht.

Der Erfindung lag daher die Aufgabe zugrunde, mittels eines technisch einfachen und preiswerten Verfahrens aromatische, bevorzugt aromatisch/aliphatische und besonders bevorzugt aliphatische, hochfunktionelle und hochverzweigte Polycarbonate bereitzustellen, deren Strukturen sich leicht an die Erfordernisse der Anwendung anpassen lassen und die aufgrund ihres definierten Aufbaus vorteilhafte Eigenschaften, wie hohe Funktionalität, hohe Reaktivität, geringe Viskosität und gute Löslichkeit, in sich vereinen können, ein Verfahren zur Herstellung dieser hochfunktionellen hoch- oder hyperverzweigten Polycarbonate, sowie deren Verwendung.

Die Aufgabe konnte erfindungsgemäß gelöst werden, indem Dialkyl- oder Diarylcarbonate mit di- oder mehrfunktionellen aliphatischen und/oder aromatischen Alkoholen umgesetzt wurden.

In einer alternativen Ausführungsform der Erfindung werden Phosgen, Diphosgen oder Triphosgen anstelle der Carbonate als Ausgangsmaterial eingesetzt.

Gegenstand der Erfindung ist somit ein Verfahren zur Herstellung von hochfunktionellen, hoch- oder hyperverzweigten Polycarbonaten, mindestens umfassend die Schritte:
a) Herstellung eines oder mehrerer Kondensationsprodukte (K) entweder durch
   (a1) Umsetzung mindestens eines organischen Carbonats (A) der allgemeinen Formel RO[(CO)O]ₙR mit mindestens einem aliphatischen, aliphatisch/aromatischen oder aromatischen Alkohol (B1), welcher mindestens 3 OH-Gruppen aufweist, unter Eliminierung von Alkoholen ROH, wobei es sich bei R jeweils unabhängig voreinander um einen geradkettigen oder verzweigten alipha-tischen, aromatisch/aliphatischen oder aromatischen Kohlenwasserstoffrest mit 1 bis 20 C-Atomen handelt, und wobei die Reste R auch unter Bildung eines Ringes miteinander verbunden sein können, und n eine ganze Zahl von 1 bis 5 darstellt
      oder
   (a2) Umsetzung von Phosgen, Diphosgen oder Triphosgen mit dem besagten aliphatischen, aliphatisch/aromatischen oder aromatischen Alkohol (B1) unter Freisetzung von Chlorwasserstoff,
   und
(b) intermolekulare Umsetzung der Kondensationsprodukte (K) zu einem hochfunktionellen, hoch- oder hyperverzweigten Polycarbonat,
   wobei das Mengenverhältnis der OH-Gruppen zu den Phosgenen oder den Carbonaten im Reaktionsgemisch so gewählt wird, dass die Kondensationsprodukte (K) im Mittel entweder eine Carbonat- oder Carbamoylchloridgruppe und mehr als eine OH-Gruppe oder eine OH-Gruppe und mehr als eine Carbonat- oder Carbamoylchloridgruppe aufweisen.

Gegenstand der Erfindung sind weiterhin die nach diesem Verfahren hergestellten hochfunktionellen, hoch- oder hyperverzweigten Polycarbonate und deren Verwendung.

Unter hyperverzweigten Polycarbonaten werden im Rahmen dieser Erfindung unvernetzte Makromoleküle mit Hydroxyl- und Carbonat- oder Carbamoylchloridgruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen, verzweigten Seitengruppen, aufgebaut sein oder aber, als Kombination der beiden Extreme, lineare und verzweigte Molekülteile aufweisen. Zur Definition von dendrimeren und hyperverzweigten Polymeren siehe auch P.J. Flory, J. Am. Chem. Soc. 1952, 74, 2718 und H. Frey et al., Chem. Eur. J. 2000, 6, No. 14, 2499.

Unter "hoch-" und "hyperverzweigt" wird im Zusammenhang mit der vorliegenden Erfindung verstanden, dass der Verzweigungsgrad (Degree of Branching, DB), das heißt die mittlere Anzahl dendritischer Verknüpfungen plus mittlere Anzahl der Endgruppen pro Molekül, 10 bis 99,9 %, bevorzugt 20 bis 99 %, besonders bevorzugt 20 - 95 % beträgt.

Unter "dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48, 30.

Es stellt einen Vorteil der vorliegenden Erfindung dar, daß die erfindungsgemäßen Polycarbonate unvernetzt sind. "Unvernetzt" im Rahmen dieser Schrift bedeutet, daß ein Vernetzungsgrad von weniger als 15 Gew.%, bevorzugt von weniger als 10 Gew.%, bestimmt über den unlöslichen Anteil des Polymeren, vorhanden ist.

Der unlösliche Anteil des Polymeren wurde bestimmt durch vierstündige Extraktion mit dem gleichen Lösungsmittel, wie es für die Gelpermeationschromatographie verwendet wird, also Tetrahydrofuran, Dimethylacetamid oder Hexafluorisopropanol, je nachdem, in welchem Lösungsmittel das Polymer besser löslich ist, in einer Soxhlet-Apparatur und nach Trocknung des Rückstandes bis zur Gewichtskonstanz Wägung des verbliebenen Rückstandes.

Gegenstand der Erfindung ist ferner die Verwendung der erfindungsgemäßen hochfunktionellen hochverzweigten Polycarbonate als Haftvermittler, Thixotropiermittel, Fließhilfsmittel oder als Bausteine zur Herstellung von Polyadditions- oder Polykondensationspolymeren, zum Beispiel in Lacken, Überzügen, Klebstoffen, Dichtmassen, Giesselastomeren oder Schaumstoffen.

### Zu der Erfindung ist im Einzelnen das Folgende auszuführen:

Als Ausgangsmaterial kann Phosgen, Diphosgen oder Triphosgen, unter diesen bevorzugt Phosgen, eingesetzt werden, vorzugsweise werden jedoch organische Carbonate (A) verwendet.

Bei den Resten R der als Ausgangsmaterial eingesetzten organischen Carbonate (A) der allgemeinen Formel RO[(CO)O]ₙR handelt es sich jeweils unabhängig voneinander um einen geradkettigen oder verzweigten aliphatischen, aromatisch/aliphatischen (araliphatischen) oder aromatischen Kohlenwasserstoffrest mit 1 bis 20 C-Atomen. Die beiden Reste R können auch unter Bildung eines Ringes miteinander verbunden sein. Die beiden Reste R können gleich oder unterschiedlich sein, bevorzugt sind sie gleich. Bevorzugt handelt es sich um einen aliphatischen Kohlenwasserstoffrest und besonders bevorzugt um einen geradkettigen oder verzweigten Alkylrest mit 1 bis 5 C-Atomen, oder um einen substituierten oder unsubstituierten Phenylrest.

R steht dabei für einen geradkettigen oder verzweigten, bevorzugt geradkettigen, (cyclo)aliphatischen, aromatisch/aliphatischen oder aromatischen, bevorzugt (cyclo)aliphatischen oder aromatischen, besonders bevorzugt aliphatischen Kohlenwasserstoffrest mit 1 bis 20 C-Atomen, bevorzugt 1 bis 12, besonders bevorzugt 1 bis 6 und ganz besonders bevorzugt 1 bis 4 Kohlenstoffatomen.

Beispiele dafür sind Methyl, Ethyl, iso-Propyl, n-Propyl, n-Butyl, iso-Butyl, sek-Butyl, tert-Butyl, n-Hexyl, n-Heptyl, n-Octyl, n-Decyl, n-Dodecyl, n-Tetradecyl, n-Hexadecyl, n-Octadecyl, n-Eicosyl, 2-Ethylhexyl, Cyclopentyl, Cyclohexyl, Cyclooctyl, Cyclododecyl, Phenyl, o- oder p-Tolyl oder Naphthyl. Bevorzugt sind Methyl, Ethyl, n-Butyl und Phenyl.

Die Reste R können dabei gleich oder verschieden sind, bevorzugt sind sie gleich.

Die Reste R können auch unter Bildung eines Ringes miteinander verbunden sein. Beispiele für derartige zweibindige Reste R sind 1,2-Ethylen, 1,2-Propylen und 1,3-Propylen.

Generell handelt es sich bei n um eine ganze Zahl von 1 bis 5, bevorzugt von 1 bis 3, besonders bevorzugt von 1 bis 2.

Bei den Carbonaten kann es sich bevorzugt um einfache Carbonate der allgemeinen Formel RO(CO)OR handeln, d.h. in diesem Falle steht n für 1.

Dialkyl- oder Diarylcarbonate können zum Beispiel hergestellt werden aus der Reaktion von aliphatischen, araliphatischen oder aromatischen Alkoholen, vorzugsweise Monoalkoholen mit Phosgen. Weiterhin können sie auch über oxidative Carbonylierung der Alkohole oder Phenole mittels CO in Gegenwart von Edelmetallen, Sauerstoff oder NOₓ hergestellt werden. Zu Herstellmethoden von Diaryl- oder Dialkylcarbonaten siehe auch "Ullmann's Encyclopedia of Industrial Chemistry", 6th Edition, 2000 Electronic Release, Verlag Wiley-VCH.

Es spielt erfindungsgemäß keine signifikante Rolle, auf welche Weise das Carbonat hergestellt worden ist.

Beispiele geeigneter Carbonate umfassen aliphatische, aromatisch/aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Di-n-propylcarbonat, Di-n-butylcarbonat, Düsobutylcarbonat, Dipentylcarbonat, Dihexylcarbonat, Dicyclohexylcarbonat, Diheptylcarbonat, Dioctylcarbonat, Didecylcarbonat oder Didodecylcarbonat.

Beispiele für Carbonate, bei denen n größer als 1 ist, umfassen Dialkyldicarbonate, wie Di(tert.butyl)dicarbonat oder Dialkyltricarbonate wie Di(tert.butyl)tricarbonat.

Bevorzugt werden aliphatische Carbonate eingesetzt, insbesondere solche, bei denen die Reste 1 bis 5 C-Atome umfassen, wie zum Beispiel Dimethylcarbonat, Diethylcarbonat, Di-n-propylcarbonat, Di-n-butylcarbonat oder Düsobutylcarbonat. Ein bevorzugtes aromatisches Carbonat ist Diphenylcarbonat.

Die organischen Carbonate werden mit mindestens einem aliphatischen oder aromatischen Alkohol (B1), welcher mindestens 3 OH-Gruppen aufweist oder Gemischen zweier oder mehrerer verschiedener Alkohole umgesetzt.

Der Alkohol (B1) kann verzweigt oder unverzweigt, substituiert oder unsubstituiert sein und 3 bis 26 Kohlenstoffatome aufweisen. Bevorzugt handelt es sich um einen (cyclo)aliphatischen, besonders bevorzugt um einen aliphatischen Alkohol.

Beispiele für Verbindungen mit mindestens drei OH-Gruppen umfassen Glycerin, Trimethylolmethan, Trimethylolethan, Trimethylolpropan, Trimethylolbutan, 1,2,4-Butantriol, Tris(hydroxy-methyl)amin, Tris(hydroxyethyl)amin, Tris(hydroxy-propyl)amin, Pentaerythrit, Diglycerin, Triglycerin, Polyglycerine, Bis(tri-methylol-propan), Tris(hydroxymethyl)isocyanurat, Tris(hydroxyethyl)isocyanurat, Phloroglucinol, Trihydroxytoluol, Trihydroxydimethylbenzol, Phloroglucide, Hexahydroxybenzol, 1,3,5-Benzoltrimethanol, 1,1,1-Tris(4'-hydroxyphenyl)methan, 1,1,1-Tris(4'-hydroxyphenyl)ethan, Zucker, wie zum Beispiel Glucose, Zuckerderivate, wie z.B. Sorbit, Mannit, Diglycerol, Threit, Erythrit, Adonit (Ribit), Arabit (Lyxit), Xylit, Dulcit (Galactit), Maltit, Isomalt, tri- oder höherfunktionelle Polyetherole auf Basis tri- oder höherfunktioneller Alkohole und Ethylenoxid, Propylenoxid oder Butylenoxid oder deren Gemischen, oder Polyesterole.

Die genannten mindestens drei OH-Gruppen aufweisenden Alkohole können gegebenenfalls auch alkoxyliert sein, d.h. mit ein bis 30, bevorzugt ein bis 20, besonders bevorzugt ein bis 10 und ganz besonders bevorzugt ein bis fünf Molekülen Ethylenoxid und/oder Propylenoxid und/oder iso-Butylenoxid pro Hydroxygruppe umgesetzt sein.

Dabei sind Glycerin, Trimethylolethan, Trimethylolpropan, 1,2,4-Butantriol, Pentaerythrit, sowie deren Polyetherole auf Basis von Ethylenoxid und/oder Propylenoxid besonders bevorzugt.

Diese mehrfunktionellen Alkohole können auch in Mischung mit difunktionellen Alkoholen (B2) eingesetzt werden, mit der Maßgabe, dass die mittlere OH-Funktionalität aller eingesetzten Alkohole zusammen größer als 2 ist. Beispiele geeigneter Verbindungen mit zwei OH-Gruppen umfassen Ethylenglykol, Diethylenglykol, Triethylenglykol, 1,2-und 1,3-Propandiol, Dipropylenglykol, Tripropylenglykol, Neopentylglykol, 1,2-, 1,3- und 1,4-Butandiol, 1,2-, 1,3- und 1,5-Pentandiol, 1,6-Hexandiol, 1,2- oder 1,3-Cyclopentandiol, 1,2-, 1,3- oder 1,4-Cyclohexandiol, 1,1-, 1,2-, 1,3- oder 1,4-Cyclohexandimethanol, Bis(4-Hydroxycyclohexyl)methan, Bis(4-Hydroxycyclo-hexyl)ethan, 2,2- Bis(4-Hydroxycyclohexyl)propan, 1,1'-Bis(4-Hydroxyphenyl)-3,3-5-trimethylcyclohexan, Resorcin, Hydrochinon, 4,4'-Dihydroxydiphenyl, Bis-(4-Hydroxyphenyl)sulfid, Bis(4-Hydroxyphenyl)sulfon, Bis(hydroxymethyl)benzol, Bis(Hydroxymethyl)toluol, Bis(p-hydroxyphenyl)methan, Bis(p-hydroxyphenyl)ethan, 2,2-Bis(p-hydroxyphenyl)propan, 1,1-Bis(p-hydroxyphenyl)cyclohexan, Dihydroxybenzophenon, difunktionelle Polyetherpolyole auf Basis Ethylenoxid, Propylenoxid, Butylenoxid oder deren Gemische, Polytetrahydrofuran mit einem Molgewicht von 162 bis 2000, Polycaprolacton oder Polyesterole auf Basis von Diolen und Dicarbonsäuren.

Die Diole dienen zur Feineinstellung der Eigenschaften des Polycarbonates. Falls difunktionelle Alkohole eingesetzt werden, wird das Verhältnis von difunktionellen Alkoholen (B2) zu den mindestens trifunktionellen Alkoholen (B1) vom Fachmann je nach den gewünschten Eigenschaften des Polycarbonates festgelegt. Im Regelfalle beträgt die Menge des oder der Alkohole (B2) 0 bis 39,9 mol % bezüglich der Gesamtmenge aller Alkohole (B1) und (B2) zusammen. Bevorzugt beträgt die Menge 0 bis 35 mol %, besonders bevorzugt 0 bis 25 mol % und ganz besonders bevorzugt 0 bis 10 mol %.

Die Alkohole (B1) und (B2) werden hier zusammen als (B) bezeichnet.

Die Reaktion von Phosgen, Diphosgen oder Triphosgen mit dem Alkohol oder Alkoholgemisch erfolgt in der Regel unter Eliminierung von Chlorwasserstoff, die Reaktion der Carbonate mit dem Alkohol oder Alkoholgemisch zum erfindungsgemäßen hochfunktionellen hochverzweigten Polycarbonat erfolgt unter Eliminierung des monofunktionellen Alkohols oder Phenols aus dem Carbonat-Molekül.

Die nach dem erfindungsgemäßen Verfahren gebildeten hochfunktionellen hochverzweigten Polycarbonate sind nach der Reaktion, also ohne weitere Modifikation, mit Hydroxylgruppen und mit Carbonatgruppen beziehungsweise Carbamoylchloridgruppen terminiert. Sie lösen sich gut in verschiedenen Lösemitteln.

Beispiele für derartige Lösungsmittel sind aromatische und/oder (cyclo)aliphatische Kohlenwasserstoffe und deren Gemische, halogenierte Kohlenwasserstoffe, Ketone, Ester und Ether.

Bevorzugt sind aromatische Kohlenwasserstoffe, (cyclo)aliphatische Kohlenwasserstoffe, Alkansäurealkylester, Ketone, alkoxylierte Alkansäurealkylester und deren Gemische.

Besonders bevorzugt sind ein- oder mehrfach alkylierte Benzole und Naphthaline, Ketone, Alkansäurealkylester und alkoxylierte Alkansäurealkylester sowie deren Gemische.

Als aromatische Kohlenwasserstoffgemische sind solche bevorzugt, die überwiegend aromatische C₇- bis C₁₄-Kohlenwasserstoffe umfassen und einen Siedebereich von 110 bis 300 °C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉ und C₁₀-Aromaten, Siedebereich etwa 154 - 178 °C), 150 (Siedebereich etwa 182 - 207 °C) und 200 (CAS-Nr. 64742-94-5), sowie die Shellsol®-Marken der Firma Shell. Kohlenwasserstoffgemische aus Paraffinen, Cycloparaffinen und Aromaten sind auch unter den Bezeichnungen Kristallöl (beispielsweise Kristallöl 30, Siedebereich etwa 158 - 198 °C oder Kristallöl 60: CAS-Nr. 64742-82-1), Testbenzin (beispielsweise ebenfalls CAS-Nr. 64742-82-1) oder Solventnaphtha (leicht: Siedebereich etwa 155 - 180 °C, schwer: Siedebereich etwa 225 - 300 °C,) im Handel erhältlich. Der Aromatengehalt derartiger Kohlenwasserstoffgemische beträgt in der Regel mehr als 90 Gew%, bevorzugt mehr als 95, besonders bevorzugt mehr als 98 und ganz besonders bevorzugt mehr als 99 Gew%. Es kann sinnvoll sein, Kohlenwasserstoffgemische mit einem besonders verringerten Gehalt an Naphthalin einzusetzen.

Der Gehalt an aliphatischen Kohlenwasserstoffen beträgt in der Regel weniger als 5, bevorzugt weniger als 2,5 und besonders bevorzugt weniger als 1 Gew%.

Halogenierte Kohlenwasserstoffe sind beispielsweise Chlorbenzol und Dichlorbenzol oder dessen Isomerengemische.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, -ethyl- oder -n-butylether von Ethylenglykol, Diethylenglykol, Triethylenglykol, Propylenglykol, Dipropylenglykol oder Tripropylenglykol.

Ketone sind beispielsweise Aceton, 2-Butanon, 2-Pentanon, 3-Pentanon, Hexanon, iso Butyl methyl keton, Heptanon, Cyclopentanon, Cyclohexanon oder Cycloheptanon.

(Cyclo)aliphatische Kohlenwasserstoffe sind beispielsweise Dekalin, alkyliertes Dekalin und Isomerengemische von geradlinigen oder verzweigten Alkanen und/oder Cycloalkanen.

Weiterhin bevorzugt sind n-Butylacetat, Ethylacetat, 1-Methoxypropylacetat-2, 2-Methoxyethylacetat, 2-Butanon, iso Butyl methyl keton sowie deren Gemische, insbesondere mit den oben aufgeführten aromatischen Kohlenwasserstoffgemischen.

Derartige Gemische können im Volumenverhältnis 5:1 bis 1:5 erstellt werden, bevorzugt im Volumenverhältnis 4:1 bis 1:4, besonders bevorzugt im Volumenverhältnis 3:1 bis 1:3 und ganz besonders bevorzugt im Volumenverhältnis 2:1 bis 1:2.

Bevorzugte Lösungsmittel sind Butylacetat, Methoxypropylacetat, iso Butyl methyl keton, 2-Butanon, Solvesso®-Marken und Xylol.

Weiterhin geeignet können für die Carbonate zum Beispiel Wasser, Alkohole, wie Methanol, Ethanol, Butanol, Alkohol/Wasser-Mischungen, Aceton, 2-Butanon, Dimethylformamid, Dimethylacetamid, N-Methylpyrrolidon, N-Ethylpyrrolidon, Ethylencarbonat oder Propylencarbonat sein.

Unter einem hochfunktionellen Polycarbonat ist im Rahmen dieser Erfindung ein Produkt zu verstehen, das neben den Carbonatgruppen, die das Polymergerüst bilden, end- oder seitenständig weiterhin mindestens drei, bevorzugt mindestens sechs, mehr bevorzugt mindestens zehn funktionelle Gruppen aufweist. Bei den funktionellen Gruppen handelt es sich um Carbonatgruppen beziehungsweise Carbamoylchloridgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 100 end- oder seitenständige funktionelle Gruppen auf.

Bei der Herstellung der hochfunktionellen Polycarbonate ist es notwendig, das Verhältnis von den OH-Gruppen enthaltenden Verbindungen zu Phosgen oder Carbonat (A) so einzustellen, dass das resultierende einfachste Kondensationsprodukt (im Weiteren Kondensationsprodukt (K) genannt) im Mittel entweder eine Carbonat- oder Carbamoylchloridgruppe und mehr als eine OH-Gruppe oder eine OH-Gruppe und mehr als eine Carbonat- oder Carbamoylchloridgruppe, bevorzugt im Mittel entweder eine Carbonat- oder Carbamoylchloridgruppe und mindestens zwei OH-Gruppen oder eine OH-Gruppe und mindestens zwei Carbonat- oder Carbamoylchloridgruppen enthält.

Es kann ferner sinnvoll sein, zur Feineinstellung der Eigenschaften des Polycarbonates mindestens eine zweiwertige carbonylreaktive Verbindung (A1) einzusetzen. Darunter werden solche Verbindungen verstanden, die zwei Carbonat- und/oder Carboxylgruppen aufweisen.

Carboxylgruppen können dabei Carbonsäuren, Carbonsäurechloride, Carbonsäureanhydride oder Carbonsäureester sein, bevorzugt Carbonsäureanhydride oder Carbonsäureester und besonders bevorzugt Carbonsäureester.

Falls solche zweiwertigen Verbindungen (A1) eingesetzt werden, so wird das Verhältnis von (A1) zu den Carbonaten bzw. Phosgenen (A) vom Fachmann je nach den gewünschten Eigenschaften des Polycarbonates festgelegt. Im Regelfalle beträgt die Menge des oder der zweiwertigen Verbindung (A1) 0 bis 40 mol % bezüglich der Gesamtmenge aller Carbonate/Phosgene (A) und Verbindungen (A1) zusammen. Bevorzugt beträgt die Menge 0 bis 35 mol %, besonders bevorzugt 0 bis 25 mol % und ganz besonders bevorzugt 0 bis 10 mol %.

Beispiele für Verbindungen (A1) sind Dicarbonate oder Dicarbamoylchloride von Diolen, beispielsweise Ethylenglykol, 1,2-Propandiol, 1,3-Propandiol, 1,1-Dimethylethan-1,2-diol, 2-Butyl-2-ethyl-1,3-Propandiol, 2-Ethyl-1,3-Propandiol, 2-Methyl-1,3-Propandiol, Neopentylglykol, Hydroxypivalinsäureneopentylglykolester, 1,2-, 1,3- oder 1,4-Butandiol, 1,6-Hexandiol, 1,10-Dekandiol, Bis-(4-hydroxycyclohexan)isopropyliden, Tetramethylcyclobutandiol, 1,2-, 1,3- oder 1,4-Cyclohexandiol, Cyclooctandiol, Norbornandiol, Pinandiol, Decalindiol, 2-Ethyl-1,3-Hexandiol, 2,4-Diethyl-oktan-1,3-diol, Hydrochinon, Bisphenol A, Bisphenol F, Bisphenol B, Bisphenol S, 2,2-Bis(4-hydroxy-cyclohexyl)propan, 1,1-, 1,2-, 1,3- und 1,4-Cyclohexandimethanol, 1,2-, 1,3- oder 1,4-Cyclohexandiol.

Diese können beispielsweise hergestellt werden, indem man diese Diole mit einem Überschuß an beispielsweise den oben aufgeführten Carbonaten RO(CO)OR oder Chlorkohlensäureestern umsetzt, so daß dieso erhaltenen Dicarbonate beidseitig mit Gruppen RO(CO)- substituiert sind. Eine weitere Möglichkeit ist die, die Diole zunächst mit Phosgen zu den korrespondierenden Chlorkohlensäureestern der Diole umzusetzen und anschließend mit Alkoholen umzusetzen.

Weitere Verbindungen (A1) sind Dicarbonsäuren, Ester von Dicarbonsäuren, bevorzugt die Methyl-, Ethyl-, *iso*-Propyl-, n-Propyl-, n-Butyl-, *iso*-Butyl-, *sek*-Butyl- oder *tert-*Butylester, besonders bevorzugt die Methyl-, Ethyl- oder n-Butylester.

Beispiele für derartige Dicarbonsäuren sind Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Azelainsäure, 1,4-Cyclohexandicarbonsäure oder Tetrahydrophthalsäure, Korksäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, dimere Fettsäuren, deren Isomere und Hydrierungsprodukte.

Die einfachste Struktur des Kondensationsproduktes (K), dargestellt am Beispiel der Umsetzung eines Carbonats (A) mit einem Di- oder Polyalkohol (B) ergibt dabei die Anordnung XYₘ oder YₘX, wobei X eine Carbonat- oder Carbamoylgruppe, Y eine Hydroxyl-Gruppe und m in der Regel eine ganze Zahl größer 1 bis 6, vorzugsweise größer 1 bis 4, besonders bevorzugt größer 1 bis 3 darstellt. Die reaktive Gruppe, die dabei als einzelne Gruppe resultiert, wird im folgenden generell "fokale Gruppe" genannt.

Liegt beispielsweise bei der Herstellung des einfachsten Kondensationsproduktes (K) aus einem Carbonat und einem zweiwertigen Alkohol das molare Umsetzungsverhältnis bei 1:1, so resultiert im Mittel ein Molekül des Typs XY, veranschaulicht durch die allgemeine Formel (I).

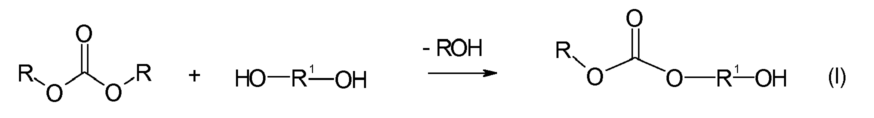

Bei der Herstellung des Kondensationsproduktes (K) aus einem Carbonat und einem dreiwertigen Alkohol bei einem molaren Umsetzungsverhältnis von 1 : 1 resultiert im Mittel ein Molekül des Typs XY₂, veranschaulicht durch die allgemeine Formel (II). Fokale Gruppe ist hier eine Carbonatgruppe.

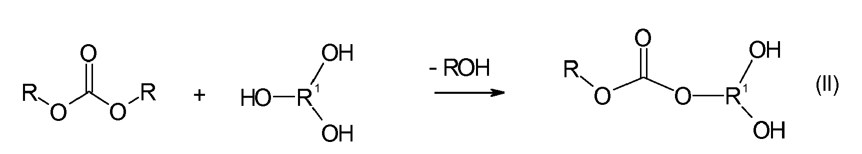

Bei der Herstellung des Kondensationsproduktes (K) aus einem Carbonat und einem vierwertigen Alkohol ebenfalls mit dem molaren Umsetzungsverhältnis 1 : 1 resultiert im Mittel ein Molekül des Typs XY₃, veranschaulicht durch die allgemeine Formel (III). Fokale Gruppe ist hier eine Carbonatgruppe.

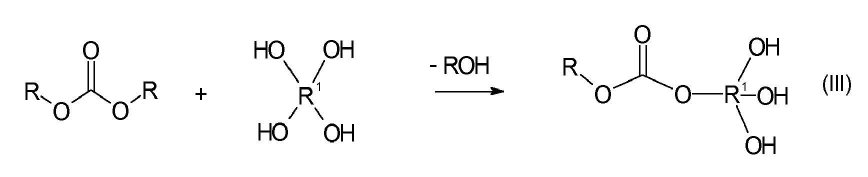

In den Formeln (I) bis (III) hat R die eingangs definierte Bedeutung und R¹steht für einen aliphatischen oder aromatischen Rest.

Weiterhin kann die Herstellung des Kondensationsprodukts (K) zum Beispiel auch aus einem Carbonat und einem dreiwertigen Alkohol, veranschaulicht durch die allgemeine Formel (IV), erfolgen, wobei das Umsetzungsverhältnis bei molar 2:1 liegt. Hier resultiert im Mittel ein Molekül des Typs X₂Y, fokale Gruppe ist hier eine OH-Gruppe. In der Formel (IV) haben R und R¹ die gleiche Bedeutung wie oben in den Formeln (I) bis (III).

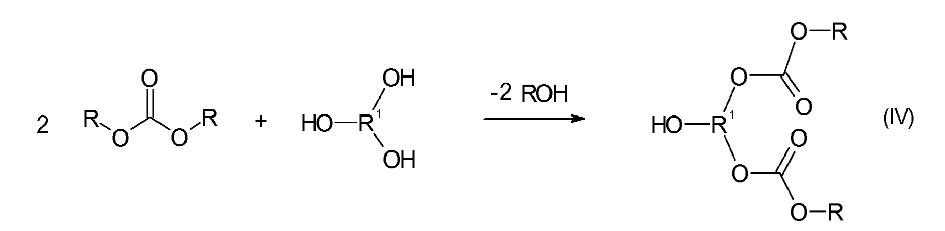

Werden zu den Komponenten zusätzlich difunktionelle Verbindungen, z.B ein Dicarbonat oder ein Diol gegeben, so bewirkt dies eine Verlängerung der Ketten, wie beispielsweise in der allgemeinen Formel (V) veranschaulicht. Es resultiert wieder im Mittel ein Molekül des Typs XY₂, fokale Gruppe ist eine Carbonatgruppe.

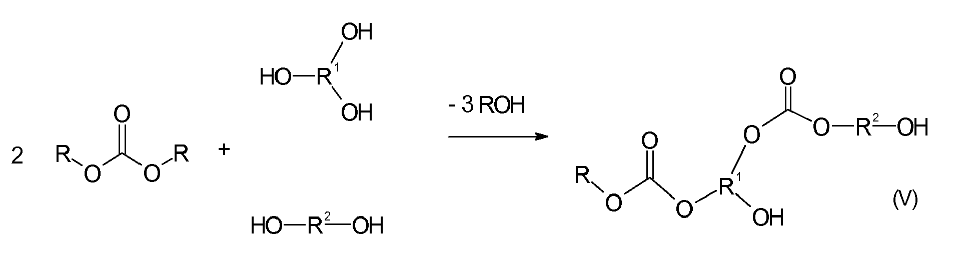

In Formel (V) bedeutet R² einen aliphatischen oder aromatischen Rest, R und R¹ sind wie vorstehend beschrieben definiert.

Es können auch mehrere Kondensationsprodukte (K) zur Synthese eingesetzt werden. Hierbei können einerseits mehrere Alkohole beziehungsweise mehrere Carbonate eingesetzt werden. Weiterhin lassen sich durch die Wahl des Verhältnisses der eingesetzten Alkohole und der Carbonate bzw. der Phosgene Mischungen verschiedener Kondensationsprodukte unterschiedlicher Struktur erhalten. Dies sei am Beispiel der Umsetzung eines Carbonates mit einem dreiwertigen Alkohol beispielhaft erläutert. Setzt man die Ausgangsprodukte im Verhältnis 1:1 ein, wie in (II) dargestellt, so erhält man ein Molekül XY₂. Setzt man die Ausgangsprodukte im Verhältnis 2:1 ein, wie in (IV) dargestellt, so erhält man ein Molekül X₂Y. Bei einem Verhältnis zwischen 1:1 und 2:1 erhält man eine Mischung von Molekülen XY₂ und X₂Y.

Typische Reaktionsbedingungen der Umsetzung von (A) mit (B) zum Kondensationsprodukt (K) sind im folgenden dargestellt:

Die Stöchiometrie der Komponenten (A) und (B) wird generell so gewählt, daß das resultierende Kondensationsprodukt (K) entweder eine Carbonat- oder Carbamoylchloridgruppe und mehr als eine OH-Gruppe oder eine OH-Gruppe und mehr als eine Carbonat- oder Carbamoylchloridgruppe aufweist. Dies wird im ersten Fall erreicht durch eine Stöchiometrie von 1 mol Carbonatgruppen : >2 mol OH-Gruppen, beispielsweise eine Stöchiometrie von 1 : 2,1 bis 8, bevorzugt 1 : 2,2 bis 6, besonders bevorzugt 1 : 2,5 bis 4 und ganz besonders bevorzugt 1 : 2,8 bis 3,5.

Im zweiten Fall wird dies erreicht durch eine Stöchiometrie von mehr als 1 mol Carbonatgruppen : <1 mol OH-Gruppen, beispielsweise eine Stöchiometrie von 1 : 0,1 bis 0,48, bevorzugt 1 : 0,15 bis 0,45, besonders bevorzugt 1 : 0,25 bis 0,4 und ganz besonders bevorzugt 1 : 0,28 bis 0,35.

Die Temperatur sollte ausreichend für die Umsetzung des Alkohols mit der entsprechenden Carbonylkomponente sein. In der Regel ist für die Umsetzung mit einem Phosgen eine Temperatur von -20 °C bis 120 °C, bevorzugt 0 bis 100 und besonders bevorzugt 20 bis 80 °C ausreichend. Bei Einsatz eines Carbonats sollte die Temperatur 60 bis 180 °C, bevorzugt 80 bis 160 °C, besonders bevorzugt 100 bis 160 und ganz besonders bevorzugt 120 bis 140 °C betragen.

Als Lösungsmittel kommen die bereits oben angeführten Lösungsmittel in Frage. Es stellt eine bevorzugte Ausführungsform dar, die Reaktion ohne Lösungsmittel durchzuführen.

Die Reihenfolge der Zugabe der einzelnen Komponenten spielt zumeist eine untergeordnete Rolle. In der Regel ist es sinnvoll die Überschußkomponente der beiden Reaktionspartner vorzulegen und die Unterschußkomponente zuzugeben. Alternativ ist es ebenfalls möglich, die beiden Kompoenten vor Reaktionsbeginn miteinander zu vermischen und diese Gemisch anschließend auf die erforderliche Reaktionstemperatur aufzuheizen.

Die beispielhaft in den Formeln (I) - (V) beschriebenen einfachen Kondensationsprodukte (K) reagieren erfindungsgemäß bevorzugt intermolekular unter Bildung von hochfunktionellen Polykondensationsprodukten, im folgenden Polykondensationsprodukte (P) genannt. Die Umsetzung zum Kondensationsprodukt (K) und zum Polykondensationsprodukt (P) erfolgt üblicherweise bei einer Temperatur von 0 bis 300 °C, bevorzugt 0 bis 250°C, besonders bevorzugt bei 60 bis 200°C und ganz besonders bevorzugt bei 60 bis 160°C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel die oben genannten und besonders bevorzugt Decan, Dodecan, Benzol, Toluol, Chlorbenzol, Xylol, Dimethylformamid, Dimethylacetamid oder Solventnaphtha.

In einer bevorzugten Ausführungsform wird die Kondensationsreaktion in Substanz durchgeführt. Der bei der Reaktion freiwerdende monofunktionelle Alkohol oder das Phenol ROH kann zur Beschleunigung der Reaktion aus dem Reaktionsgleichgewicht entfernt werden, zum Beispiel destillativ, gegebenenfalls bei vermindertem Druck.

Die Abtrennung des Alkohols oder Phenols kann auch durch Durchleiten eines unter den Reaktionsbedingungen im wesentlichen inerten Gasstromes (Strippen), wie z.B. Stickstoff, Wasserdampf, Kohlenstoffdioxid oder auch eines sauerstoffhaltigen Gases, wie z.B. Luft oder Magerluft, unterstützt werden.

Falls Abdestillieren vorgesehen ist, ist es regelmäßig empfehlenwert, solche Carbonate einzusetzen, welche bei der Umsetzung Alkohole oder Phenole ROH mit einem Siedepunkt von weniger als 140°C bei dem vorliegenden Druck freisetzen.

Zur Beschleunigung der Reaktion können auch Katalysatoren oder Katalysatorgemische zugegeben werden. Geeignete Katalysatoren sind Verbindungen, die Veresterungs- oder Umesterungsreaktionen katalysieren, zum Beispiel Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin sogenannte Doppelmetallcyanid (DMC)-Katalysatoren, wie zum Beispiel in der DE 10138216 oder in der DE 10147712 beschrieben.

Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titan-tetra-butylat, Titantetraisopropylat, Dibutylzinnoxid, Dibutylzinn-dilaurat, Zinndioctoat, Zirkonacetylacetonat oder Gemische davon eingesetzt.

Die Zugabe des Katalysators erfolgt im allgemeinen in einer Menge von 50 bis 10000, bevorzugt von 100 bis 5000 Gew. ppm bezogen auf die Menge des eingesetzten Alkohols oder Alkoholgemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (K) bzw. die Polykondensationsprodukte (P), die bei erhöhter Temperatur hergestellt wurden, sind bei Raumtemperatur üblicherweise über einen längeren Zeitraum, beispielsweise über mindestens 6 Wochen, stabil, ohne Trübungen, Ausfällungen und/oder einen Viskositätsanstieg zu zeigen.

Aufgrund der Beschaffenheit der Kondensationsprodukte (K) ist es möglich, daß aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) im Idealfall entweder eine Carbonat- oder Carbamoylchloridgruppe als fokale Gruppe und mehr als zwei OH-Gruppen oder aber eine OH-Gruppe als fokale Gruppe und mehr als zwei Carbonat- oder Carbamoylchloridgruppen auf. Die Anzahl der reaktiven Gruppen ergibt sich dabei aus der Beschaffenheit der eingesetzten Kondensationsprodukte (K) und dem Polykondensationsgrad.

Beispielsweise kann ein Kondensationsprodukt (K) gemäß der allgemeinen Formel (II) durch dreifache intermolekulare Kondensation zu zwei verschiedenen Polykondensationsprodukten (P), die in den allgemeinen Formeln (VI) und (VII) wiedergegeben werden, reagieren.

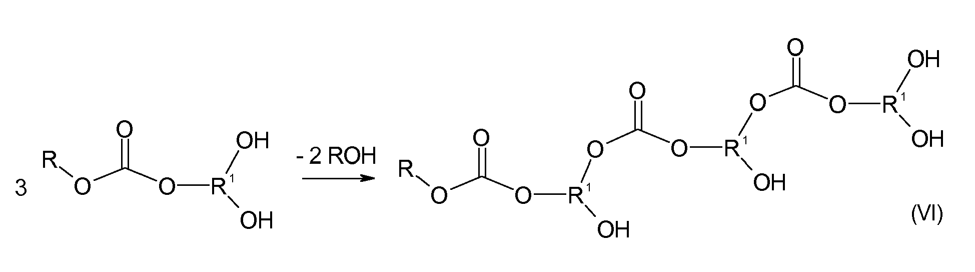

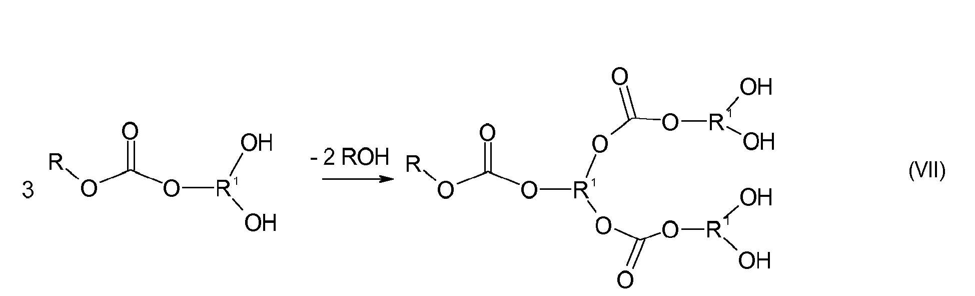

In Formel (VI) und (VII) sind R und R¹ wie vorstehend definiert.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das Polykondensationsprodukt (P) lagerstabil ist. Dies ist in der Regel unterhalb von 60 °C, bevorzugt unter 50 °C, besonders bevorzugt unterhalb von 40 °C und ganz besonders bevorzugt bei Raumtemperatur der Fall.

Weiterhin kann man den Katalysator desaktivieren, bei basischen Katalysatoren zum Beispiel durch Zugabe einer sauren Komponente, zum Beispiel einer Lewis-Säure oder einer organischen oder anorganischen Protonensäure.

Ferner ist es möglich, die Reaktion durch Verdünnen mit einem vorgekühlten Lösungsmittel zu stoppen. Dies ist insbesondere dann bevorzugt, wenn man die Viskosität des Reaktionsgemischs durch Zugabe von Lösungsmittel anpassen muß.

Die erfindungsgemäßen hochfunktionellen hoch- oder hyperverzweigten Polycarbonate weisen in der Regel eine Glasübergangstemperatur von weniger als 50 °C, bevorzugt weniger als 30 und besonders bevorzugt weniger als 10 °C auf.

Die OH-Zahl beträgt meist 100 mg KOH/g oder mehr, bevorzugt 150 mg KOH/g oder mehr.

Das gewichtsmittlere Molgewicht M_{w} liegt zumeist zwischen 1.000 und 150.000, bevorzugt von 2000 bis 120.000 g/mol, das zahlenmittlere Molgewicht Mₙ zwischen 500 und 50.000, bevorzugt zwischen 1.000 und 40.000 g/mol.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt werden.

So kann bei einer Carbonatgruppe bzw. Carbamoylgruppe als fokaler Gruppe zum Beispiel ein Mono-, Di- oder Polyamin zugegeben werden.

Bei einer Hydroxylgruppe als fokaler Gruppe kann dem Produkt (P) beispielsweise ein Mono-, Di- oder Polyisocyanat, eine Epoxydgruppen enthaltende Verbindung oder ein mit OH-Gruppen reaktives Säurederivat zugegeben werden.

Die Herstellung der erfindungsgemäßen hochfunktionellen Polycarbonate erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die erfindungsgemäßen Produkte nach der Herstellung ohne weitere Reinigung weiterverarbeitet werden.

Falls erforderlich kann das Reaktionsgemisch einer Entfärbung, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispielsweise 0,1 - 50 Gew%, bevorzugt 0,5 bis 25 Gew%, besonders bevorzugt 1 - 10 Gew% bei Temperaturen von beispielsweise 10 bis 100 °C, bevorzugt 20 bis 80 °C und besonders bevorzugt 30 bis 60 °C unterworfen werden.

Gegebenenfalls kann das Reaktionsgemisch auch zur Entfernung von eventuell vorhandenen Ausfällungen filtriert werden.

In einer weiteren bevorzugten Ausführungsform wird das Produkt gestrippt, das heißt von niedermolekularen, flüchtigen Verbindungen befreit. Dazu kann nach Erreichen des gewünschten Umsatzgrades der Katalysator optional desaktiviert und die niedermolekularen flüchtigen Bestandteile, zum Beispiel Monoalkohole, Phenole, Carbonate, Chlorwasserstoff oder leichtflüchtige oligomere oder cyclische Verbindungen destillativ, gegebenenfalls unter Einleitung eines Gases, vorzugsweise Stickstoff, Kohlendioxid oder Luft, gegebenenfalls bei vermindertem Druck, entfernt werden.

In einer weiteren bevorzugten Ausführungsform können die erfindungsgemäßen Polycarbonate neben den bereits durch die Reaktion enthalten funktionellen Gruppen weitere funktionelle Gruppen enthalten. Die Funktionalisierung kann dabei während des Molekulargewichtsaufbaus oder auch nachträglich, d.h. nach Beendigung der eigentlichen Polykondensation erfolgen.

Gibt man vor oder während des Molekulargewichtsaufbaus Komponenten zu, die neben Hydroxyl- oder Carbonatgruppen weitere funktionelle Gruppen oder funktionelle Elemente besitzen, so erhält man ein Polycarbonat-Polymer mit statistisch verteilten, von den Carbonat- bzw. Carbamoylchlorid und Hydroxylgruppen verschiedenen Funktionalitäten.

Derartige Effekte lassen sich zum Beispiel durch Zusatz von Verbindungen während der Polykondensation erzielen, die neben Hydroxylgruppen, Carbonatgruppen oder Carbamoylchloridgruppen weitere funktionelle Gruppen oder funktionelle Elemente, wie Mercaptogruppen, primäre, sekundäre oder tertiäre Aminogruppen, Ethergruppen, Carbonsäuregruppen oder deren Derivate, Sulfonsäuregruppen oder deren Derivate, Phosphonsäuregruppen oder deren Derivate, Silangruppen, Siloxangruppen, Arylreste oder langkettige Alkylreste tragen.

Zur Modifikation mittels Carbamat-Gruppen lassen sich beispielsweise Ethanolamin, Propanolamin, Isopropanolamin, 2-(Butylamino)ethanol, 2-(Cyclohexylamino)ethanol, 2-Amino-1-butanol, 2-(2'-Amino-ethoxy)ethanol oder höhere Alkoxylierungsprodukte des Ammoniaks, 4-Hydroxy-piperidin, 1-Hydroxyethylpiperazin, Diethanolamin, Dipropanolamin, Düsopropanol-amin, Tris(hydroxymethyl)aminomethan,Tris(hydroxyethyl)aminomethan, Ethylendiamin, Propylendiamin, Hexamethylendiamin oder Isophorondiamin verwenden.

Für die Modifikation mit Mercaptogruppen lässt sich zum Beispiel Mercaptoethanol einsetzten. Tertiäre Aminogruppen lassen sich zum Beispiel durch Einbau von Triethanolamin, Tripropanolamin, N-Methyldiethanolamin, N-Methyldipropanolamin oder N,N-Dimethylethanolamin erzeugen. Ethergruppen können zum Beispiel durch Einkondensation von di- oder höherfunktionellen Polyetherolen generiert werden. Durch Zugabe von Dicarbonsäuren, Tricarbonsäuren, Dicarbonsäureestern, wie beispielsweise Terephthalsäuredimethylester oder Tricarbonsäureestern lassen sich Estergruppen erzeugen. Durch Reaktion mit langkettigen Alkanolen oder Alkandiolen lassen sich langkettige Alkylreste einbringen. Die Reaktion mit Alkyl- oder Aryldüsocyanaten generiert Alkyl-, Aryl- und Urethangruppen aufweisende Polycarbonate, die Zugabe von primären oder sekundären Aminen führt zur Einbringung von Urethan- oder Harnstoffgruppen.

Eine nachträgliche Funktionalisierung kann man erhalten, indem das erhaltene hochfunktionelle, hoch- oder hyperverzweigte Polycarbonat in einem zusätzlichen Verfahrensschritt (Schritt c)) mit einem geeigneten Funktionalisierungsreagenz, welches mit den OH- und/oder Carbonat- oder Carbamoylchlorid-Gruppen des Polycarbonates reagieren kann, umsetzt.

Hydroxylgruppen enthaltende hochfunktionelle, hoch- oder hyperverzweigte Polycarbonate können zum Beispiel durch Zugabe von Säuregruppen- oder Isocyanatgruppen enthaltenden Molekülen modifiziert werden. Beispielsweise lassen sich Säuregruppen enthaltende Polycarbonate durch Umsetzung mit Anhydridgruppen enthaltenden Verbindungen erhalten.

Weiterhin können Hydroxylgruppen enthaltende hochfunktionelle Polycarbonate auch durch Umsetzung mit Alkylenoxiden, zum Beispiel Ethylenoxid, Propylenoxid oder Butylenoxid, in hochfunktionelle Polycarbonat-Polyetherpolyole überführt werden.

Dies kann beispielsweise zur Erhöhung der Wasserlöslichkeit oder zur Herbeifühung einer Wasseremulgierbarkeit sinnvoll sein. Dazu werden die Hydroxygruppen mit mindestens einem Alkylenoxid, beispielsweise Ethylenoxid, Propylenoxid, iso-Butylenoxid und/oder Styroloxid, bevorzugt Ethylenoxid und/oder Propylenoxid und besonders bevorzugt Ethylenoxid umgesetzt. Je Hydroxygruppe setzt man dafür von 1 bis 200, bevorzugt 2 bis 200, besonders bevorzugt 5 bis 100, ganz besonders bevorzugt 10 bis 100 und insbesondere 20 bis 50 Alkylenoxideeinheiten ein.

Eine bevorzugte Ausführungsform der vorliegenden Erfindung stellt es dar, die erfindungsgemäßen Polycarbonate zumindest teilweise mit mindestens einem monofunktionellen Polyalkylenoxidpolyetheralkohol umsetzt. Dadurch wird eine verbesserte Wasseremulgierbarkeit bewirkt.

Monofunktionelle Polyalkylenoxidpolyetheralkohole sind Umsetzungsprodukte von geeigneten Startermolekülen mit Polyalkylenoxiden.

Geeignete Startermoleküle zur Herstellung einwertiger Polyalkylenoxidpolyetheralkohole sind Thiolverbindungen, Monohydroxyverbindungen der allgemeinen Formel

R⁵-O-H

oder sekundäre Monoamine der allgemeinen Formel

R⁶R⁷N-H,

### in welchen

R⁵, R⁶ und R⁷ unabhängig voneinander unabhängig voneinander jeweils C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeuten oder R⁶ und R⁷ gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.

Bevorzugt sind R⁵, R⁶ und R⁷ unabhängig voneinander C₁- bis C₄-Alkyl, d.h. Methyl, Ethyl, *iso*-Propyl, n-Propyl, n-Butyl, *iso*-Butyl, *sek*-Butyl oder *tert*-Butyl, besonders bevorzugt sind R⁵, R⁶ und R⁷ Methyl.

Beispielsweise geeignete einwertige Startermoleküle können gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, Cyclopentanol, die isomeren Methylcyclohexanole oder Hydroxymethylcyclohexan, 3-Ethyl-3-hydroxy-methyloxetan, oder Tetrahydrofurfurylalkohol; ungesättigte Alkohole wie Allylalkohol, 1,1 Dimethyl-allylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-butylamin, Düsobutylamin, Bis-(2-ethylhexyl)-amin, N-Methyl- und N-Ethylcyclohexylamin oder Dicyclohexylamin, heterocylische sekundäre Amine wie Morpholin, Pyrrolidin, Piperidin oder 1H-Pyrazol, sowie Aminoalkohole wie 2-Dimethylaminoethanol, 2-Diethylaminoethanol, 2-Diisopropylaminoethanol, 2-Dibutylaminoethanol, 3-(Dimethylamino)-1-propanol oder 1-(Dimethylamino)-2-propanol.

Beispiele für die auf Aminen gestarteten Polyether sind die sogenannten Jeffamine® M-Serien, die methylgekappte Polyalkylenoxide mit einer Aminofunktion darstellen, wie M-600 (XTJ-505), mit einem Propylenoxid (PO)/Ethylenoxid (EO)-Verhältnis von ca. 9:1 und einer Molmasse von ca. 600, M-1000 (XTJ-506): PO/EO-Verhältnis 3:19, Molmasse ca. 1000, M-2005 (XTJ-507): PO/EO-Verhältnis 29:6, Molmasse ca. 2000 oder M-2070: PO/EO-Verhältnis 10:31, Molmasse ca. 2000.

Für die Alkoxylierungsreaktion geeignete Alkylenoxide sind Ethylenoxid, Propylenoxid, *iso*-Butylenoxid, Vinyloxiran und/oder Styroloxid, die in beliebiger Reihenfolge oder auch im Gemisch bei der Alkoxylierungsreaktion eingesetzt werden können.

Bevorzugte Alkylenoxide sind Ethylenoxid, Propylenoxid und deren Gemische, besonders bevorzugt ist Ethylenoxid.

Bevorzugte Polyetheralkohole sind solche auf Basis von Polyalkylenoxidpolyetheralkoholen, bei deren Herstellung gesättigte aliphatische oder cycloaliphatische Alkohole der oben genannten Art als Startermoleküle eingesetzt wurden. Ganz besonders bevorzugt sind solche auf Basis von Polyalkylenoxidpolyetheralkoholen, die unter Verwendung von gesättigten aliphatischen Alkoholen mit 1 bis 4 Kohlenstoffatomen im Alkylrest hergestellt wurden. Insbesondere bevorzugt sind auf Methanol gestartete Polyalkylenoxidpolyetheralkohole.

Die einwertigen Polyalkylenoxidpolyetheralkohole weisen im statistischen Mittel in der Regel mindestens 2 Alkylenoxideinheiten, bevorzugt 5 Ethylenoxideinheiten, pro Molekül auf, besonders bevorzugt mindestens 7, ganz besonders bevorzugt mindestens 10 und insbesondere mindestens 15.

Die einwertigen Polyalkylenoxidpolyetheralkohole weisen im statistischen Mittel in der Regel bis zu 50 Alkylenoxideinheiten, bevorzugt Ethylenoxideinheiten, pro Molekül auf, bevorzugt bis zu 45, besonders bevorzugt bis zu 40 und ganz besonders bevorzugt bis zu 30.

Das Molgewicht der einwertigen Polyalkylenoxidpolyetheralkohole beträgt bevorzugt bis zu 4000, besonders bevorzugt nicht über 2000 g/mol, ganz besonders bevorzugt nicht unter 500 und insbesondere 1000 ± 200 g/mol.

Bevorzugte Polyetheralkohole sind somit Verbindungen der Formel

R⁵-O-[-Xᵢ-]ₖ-H

worin
R⁵ die oben genannten Bedeutungen hat,
k für eine ganze Zahl von 5 bis 40, bevorzugt 7 bis 45 und besonders bevorzugt 10 bis 40 steht und
jedes Xᵢ für i = 1 bis k unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-
worin Ph für Phenyl und Vin für Vinyl steht.

Zur Durchführung der Umsetzung der Polycarbonate werden die Polycarbonate (K) und/oder (P) bei Temperaturen von 40 bis 180°C, vorzugsweise 50 bis 150°C, unter Einhaltung eines Carbonat- bzw. Carbamoylchlorid-/OH-Äquivalentverhältnisses von 1 : 1 bis 100 : 1, vorzugsweise von 1 : 1 bis 50 : 1, besonders bevorzugt 1,5 : 1 bis 20 : 1 miteinander umgesetzt.

Ein großer Vorteil des erfindungsgemäßen Verfahren liegt in seiner Wirtschaftlichkeit. Sowohl die Umsetzung zu einem Kondensationsprodukt (K) oder Polykondensationsprodukt (P) als auch die Reaktion von (K) oder (P) zu Polycarbonaten mit anderen funktionellen Gruppen oder Elementen kann in einer Reaktionsvorrichtung erfolgen, was technisch und wirtschaftlich vorteilhaft ist.

Die gemäß dem erfindungsgemäßen Verfahren erhaltenen hochfunktionellen, hoch- oder hyperverzweigten Polycarbonate können beispielsweise als Haftvermittler, Thixotropiermittel, Fließverbesserer oder als Bausteine zur Herstellung von Polyadditions- oder Polykondensationspolymeren verwendet werden, beispielweise als Komponenten zur Herstellung von Lacken, Überzügen, Klebstoffen, Dichtmassen, Gießelastomeren oder Schaumstoffen sowie als Bestandteil von Bindemitteln, gegebenenfalls mit anderen Komponenten wie z.B. Isocyanaten, Epoxygruppen-enthaltenden Bindemitteln oder Alkydharzen, in Klebstoffen, Druckfarben, Beschichtungen, Schaumstoffen, Überzügen und Lacken.

In einer weiteren bevorzugten Ausführungsform der vorliegenden Erfindung können die erfindungsgemäßen Polycarbonate als Fließhilfsmittel zur Verbesserung der Rheologie von Lacken, beispielsweise von Klar- und Decklacken, eingesetzt werden.

Die erfindungsgemäßen Polyester können als Bindemittelkomponente, beispielsweise in Beschichtungsmassen, gegebenenfalls gemeinsam mit anderen Hydroxy- oder Aminogruppen aufweisenden Bindemitteln, zum Beispiel mit Hydroxy(meth)acrylaten, Hydroxystyryl(meth)acrylaten, linearen oder verzweigten Polyestern, Polyethern, Polycarbonaten, Melaminharzen oder Harnstoff-Formaldehydharzen, zusammen mit gegenüber Carboxy- und/oder Hydroxyfunktionen reaktiven Verbindungen eingesetzt werden, beispielsweise mit Isocyanaten, verkappten Isocyanaten, Epoxiden und/oder Aminoplasten, bevorzugt Isocyanaten, Epoxiden oder Aminoplasten, besonders bevorzugt mit Isocyanaten oder Epoxiden und ganz besonders bevorzugt mit Isocyanaten.

Isocyanate sind beispielsweise aliphatische, aromatische und cycloaliphatische Di- und Polyisocyanate mit einer mittleren NCO-Funktionalität von mindestens 1,8, bevorzugt 1,8 bis 5 und besonders bevorzugt 2 bis 4, sowie deren Isocyanurate, Oxadiazintrione, Iminooxadiazindione, Harnstoffe, Biurete, Amide, Urethane, Allophanate, Carbodiimide, Uretonimine und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat, cycloaliphatische Diisocyanate wie 1,4-, 1,3- oder 1,2-Düsocyanatocyclohexan, 4,4'- oder 2,4'-Di(isocyanatocyclohexyl)methan, 1-Isocyanato-3,3,5- trimethyl-5-(isocyanatomethyl)cyclohexan (Isophorondiisocyanat), 1,3-oder 1,4-Bis(isocyanatomethyl)cyclohexan oder 2,4-, oder 2,6-Diisocyanato-1-methylcyclohexan sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat.

Es können auch Gemische der genannten Diisocyanate vorliegen.

Als Polyisocyanate kommen Isocyanuratgruppen aufweisende Polyisocyanate, Uretdiondiisocyanate, Biuretgruppen aufweisende Polyisocyanate, Amidgruppen aufweisende Polyisocyanate, Urethan- oder Allophanatgruppen aufweisende Polyisocyanate, Oxadiazintriongruppen oder Iminooxadiazindiongruppen enthaltende Polyisocyanate, Carbodiimid- oder Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 1 bis 60 Gew.% bezogen auf das Di- und Polyisocyanat(gemisch), bevorzugt 2 bis 60 Gew.% und besonders bevorzugt 10 bis 55 Gew.%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Besonders bevorzugt sind Hexamethylendiisocyanat, 1,3-Bis(isocyanatomethyl)-cyclohexan, Isophorondiisocyanat und Di(isocyanatocyclohexyl)methan, ganz besonders bevorzugt sind Isophorondiisocyanat und Hexamethylendiisocyanat, insbesondere bevorzugt ist Hexamethylendiisocyanat.

Weiterhin bevorzugt sind
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyan-urate und insbesondere die auf Basis von Hexamethylendiisocyanat und Isophoron-diisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 4,5.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Die Uretdiondiisocyanate können in den erfindungsgemäßen Zubereitungen als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 23 Gew.-% und eine mittlere NCO-Funktionalität von 2,8 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondüsocyanat mit ein- oder mehrwertigen Alkoholen wie z.B. Methanol, Ethanol, *iso*-Propanol, n-Propanol, n-Butanol, *iso*-Butanol, *sek*-Butanol, *tert-*Butanol, n-Pentanol, n-Hexanol, n-Heptanol, n-Octanol, n-Decanol, n-Dodecanol (Laurylalkohol), 2-Ethylhexanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol oder mehrwertige Alkohole, wie sie oben bei den Polyesterolen aufgeführt sind, oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 4,5.
5) Oxadiazintriongruppen enthaltende Polyisocyanate, vorzugsweise von Hexamethylendiisocyanat oder Isophorondüsocyanat abgeleitet. Solche Oxadiazintriongruppen enthaltenden Polyisocyanate sind aus Diisocyanat und Kohlendioxid herstellbar.
6) Iminooxadiazindiongruppen enthaltende Polyisocyanate, vorzugsweise von Hexamethylendiisocyanat oder Isophorondüsocyanat abgeleitet. Solche Iminooxadiazindiongruppen enthaltenden Polyisocyanate sind aus Diisocyanaten mittels spezieller Katalysatoren herstellbar.
7) Carbodiimid- und/oder Uretonimin-modifizierte Polyisocyanate.

Die Polyisocyanate 1) bis 7) können im Gemisch, gegebenenfalls auch im Gemisch mit Diisocyanaten, eingesetzt werden.

Die Isocyanatgruppen der Di- oder Polyisocyanate können auch in verkappter Form vorliegen. Als Verkappungsmittel für NCO-Gruppen eignen sich z.B. Oxime, Phenole, Imidazole, Pyrazole, Pyrazolinone, Triazole, Diketopiperazine, Caprolactam, Malonsäureester oder Verbindungen, wie sie genannt sind in den Veröffentlichungen von Z.W. Wicks, Prog. Org. Coat. 3 (1975) 73 - 99 und Prog. Org. Coat 9 (1981), 3 - 28, von D.A. Wicks und Z.W. Wicks, Prog. Org. Coat. 36 (1999), 148 - 172 und Prog. Org. Coat. 41 (2001), 1 - 83 sowie in Houben-Weyl, Methoden der Organischen Chemie, Bd. XIV/2, 61 ff. Georg Thieme Verlag, Stuttgart 1963.

Unter Verkappungs- bzw. Blockierungsmitteln werden dabei Verbindungen verstanden, die Isocyanatgruppen in blockierte (verkappte bzw. geschützte) Isocyanatgruppen umwandeln, die dann unterhalb der sogenannten Deblockierungstemperatur nicht die üblichen Reaktionen einer freien Isocyanatgruppe zeigen. Solche Verbindungen mit blockierten Isocyanatgruppen kommen üblicherweise in Dual-Cure-Beschich-tungsmitteln oder in Pulverlacken zur Anwendung, die über Isocyanatgruppenhärtung endgehärtet werden.

Epoxidverbindungen sind solche mit mindestens einer, bevorzugt mit mindestens zwei, besonders bevorzugt zwei bis zehn Epoxidgruppen im Molekül.

In Betracht kommen z.B. epoxidierte Olefine, Glycidylester (z.B. Glycidyl(meth)acrylat) von gesättigten oder ungesättigten Carbonsäuren oder Glycidylether aliphatischer oder aromatische Polyole. Derartige Produkte werden im Handel in großer Zahl angeboten. Besonders bevorzugt sind Polyglycidylverbindungen vom Bisphenol A-, -F- oder-B-Typ und Glycidylether mehrfunktioneller Alkohole, z.B. des Butandiol, des 1,6-Hexandiol, des Glycerin und des Pentaerythrit. Beispiele für derartige Polyepoxidverbindungen sind Epikote^{®} 812 (Epoxidwert: ca. 0,67 mol/100g) und Epikote^{®} 828 (Epoxidwert: ca. 0,53 mol/100g), Epikote^{®} 1001, Epikote^{®} 1007 und Epikote^{®} 162 (Epoxidwert: ca. 0,61 mol/100g) der Firma Resolution, Rütapox® 0162 (Epoxidwert: ca. 0,58 mol/100g), Rütapox^{®} 0164 (Epoxidwert: ca. 0,53 mol/100g) und Rütapox^{®} 0165 (Epoxidwert: ca. 0,48 mol/100g) der Firma Bakelite AG, Araldit^{®} DY 0397 (Epoxidwert: ca. 0,83 mol/100g) der Firma Vantico AG.

Weiterhin kommen Verbindungen mit aktiven Methylol- oder Alkylalkoxygruppen, insbesondere Methylalkoxygruppen in Frage, wie z.B veretherte Umsetzungsprodukte von Formaldehyd mit Aminen, wie Melamin, Harnstoff etc., Phenol/Formaldehyd-addukte, Siloxan oder Silangruppen und Anhydride, wie sie z.B. in US 5,770,650 beschrieben sind.

Unter den technisch weit verbreiteten und bekannten, bevorzugten Aminoplasten sind besonders bevorzugt Harnstoffharze und Melaminharze, wie z.B. Harnstoff-Formaldehyd-Harze, Melamin-Formaldehyd-Harze, Melamin-Phenol-Formaldehyd-Harze oder Melamin-Harnstoff-Formaldehyd-Harze, verwendbar.

Als Harnstoffharze sind solche geeignet, die durch Umsetzung von Harnstoffen mit Aldehyden erhältlich sind und gegebenenfalls modifiziert werden können.

Als Harnstoffe sind Harnstoff, N-substituierte oder N,N'-disubstituierte Harnstoffe geeignet, wie z.B. N-Methylharnstoff, N-Phenylharnstoff, N,N'-Dimethylharnstoff, Hexamethylendiharnstoff, N,N'-Diphenylharnstoff, 1,2-Ethylendiharnstoff, 1,3-Propylendiharnstoff, Diethylentriharnstoff, Dipropylentriharnstoff, 2-Hydroxypropylendiharnstoff, 2-Imidazolidinon (Ethylenharnstoff), 2-Oxohexahydropyrimidin (Propylenharnstoff) oder 2-Oxo-5-Hydroxyhexahydropyrimidin (5-Hydroxypropylenharnstoff).

Harnstoffharze können gegebenenfalls teilweise oder vollständig modifiziert werden, z.B. durch Umsetzung mit mono- od. polyfunktionellen Alkoholen, Ammoniak bzw. Aminen (kationisch modifizierte Harnstoffharze) oder mit (Hydrogen)sulfiten (anionisch modifizierte Harnstoffharze), insbesondere geeignet sind die alkoholmodifizierten Harnstoffharze.

Als Alkohole kommen für die Modifizierung C₁ - C₆-Alkohole in Frage, bevorzugt C₁ - C₄-Alkohol und insbesondere Methanol, Ethanol, *iso*-Propanol, n-Propanol, n-Butanol, *iso*-Butanol und *sek*-Butanol.

Als Melaminharze sind solche geeignet, die durch Umsetzung von Melamin mit Aldehyden erhältlich sind und gegebenenfalls teilweise oder vollständig modifiziert werden können.

Als Aldehyde sind insbesondere Formaldehyd, Acetaldehyd, *Iso*-Butyraldehyd und Glyoxal geeignet.

Melamin-Formaldehyd-Harze sind Reaktionsprodukte der Umsetzung von Melamin mit Aldehyden, z.B. den o.g. Aldehyden, insbesondere Formaldehyd. Gegebenenfalls werden die erhaltenen Methylol-Gruppen durch Veretherung mit den oben genannten ein- oder mehrwertigen Alkoholen modifiziert. Weiterhin können die Melamin-Formaldehyd-Harze auch wie oben beschrieben durch Reaktion mit Aminen, Aminocarbonsäuren oder Sulfiten modifiziert werden.

Durch Einwirkung von Formaldehyd auf Mischungen von Melamin und Harnstoff beziehungsweise auf Mischungen aus Melamin und Phenol entstehen erfindungsgemäß ebenfalls verwendbare Melamin-Harnstoff-Formaldehyd-Harze beziehungsweise Melamin-Phenol-Formaldehyd-Harze.

Die Herstellung der genannten Aminoplaste erfolgt nach an sich bekannten Verfahren.

Besonders genannte Beispiele sind Melamin-Formaldehyd-Harze, einschließlich monomerer oder polymerer Melaminharze und teilweise oder vollständig alkylierte Melaminharze, Harnstoff-Harze, z.B. Methylolharnstoffe wie Formaldehyd-Harnstoff-Harze, Alkoxyharnstoffe wie butylierte Formaldehyd-Harnstoff-Harze, aber auch N-Methylolacrylamid-emulsionen, iso-Butoxy methyl acrylamid-emulsionen, Polyanhydride, wie z.B. Polybernsteinsäureanhydrid, und Siloxane oder Silane, z.B. Dimethyldimethoxysilane.

Besonders bevorzugt sind Aminoplastharze wie Melamin-Formaldehyd-Harze oder Formaldehyd-Harnstoff-Harze.

Des weiteren können erfindungsgemäße Hydroxygruppen-haltigen Polycarbonate auch mit α,β-ethylenisch ungesättigten Carbonsäuren oder deren Derivaten, beispielsweise (Meth)Acrylsäure oder (Meth)Acrylsäureester, zumindest teilweise ver- bzw. umgeestert werden, so daß Carbonate der Hydroxygruppen-haltigen Polyester mit den α,β-ethylenisch ungesättigten Carbonsäuren entstehen, die beispielsweise als Monomer oder Vernetzer in strahlungshärtbaren Beschichtungsmassen eingesetzt werden können.

Bei den Lacken, in denen die erfindungsgemäßen Polycarbonate als Bindemittel einsetzbar sind, kann sich um konventionelle Basislacke, Wasserbasislacke, im wesentlichen lösemittel- und wasserfreie flüssige Basislacke (100%-Systeme), im wesentlichen lösemittel- und wasserfreie feste Basislacke (Pulverlacke und pigmentierte Pulverlacke) oder im wesentlichen lösemittelfreie, ggf. pigmentierte Pulverlackdispersionen (Pulverslurry-Basislacke) handeln. Sie können thermisch, strahlungs- oder DualCure-härtbar, und selbst- oder fremdvernetzend sein.

Die erfindungsgemäßen Beschichtungsmassen eignen sich besonders zum Beschichten von Substraten wie Holz, Papier, Textil, Leder, Vlies, Kunststoffoberflächen, Glas, Keramik, mineralischen Baustoffen, wie Zement-Formsteine und Faserzementplatten, und insbesondere von Metallen oder beschichteten Metallen.

Zur Beschichtung wird üblicherweise mit den erfindungsgemäßen Beschichtungsmassen in an sich bekannter Weise beschichtet, anschließend zur Entfernung von gegebenenfalls vorhandenem Lösungsmittel getrocknet und gehärtet.

Die Beschichtung der Substrate erfolgt nach üblichen, dem Fachmann bekannten Verfahren, wobei man wenigstens eine erfindungsgemäße Beschichtungsmasse auf das zu beschichtende Substrat in der gewünschten Stärke aufbringt und die flüchtigen Bestandteile entfernt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen oder Gießen erfolgen. Die Beschichtungsstärke liegt in der Regel in einem Bereich von etwa 3 bis 1000 g/m² und vorzugsweise 10 bis 200 g/m².

Die nach dem erfindungsgemäßen Verfahren gebildeten hochfunktionellen hochverzweigten Polycarbonate sind nach der Reaktion, also ohne weitere Modifikation, mit Hydroxylgruppen und/oder mit Carbonat- oder Carbamoylchloridgruppen terminiert. Sie lösen sich gut in verschiedenen Lösemitteln, zum Beispiel in Wasser, Alkoholen, wie Methanol, Ethanol, Butanol, Alkohol/Wasser-Mischungen, Aceton, 2-Butanon, Essigester, Butylacetat, Methoxypropylacetat, Methoxyethylacetat, Tetrahydrofuran, Dimethylformamid, Dimethylacetamid, N-Methylpyrrolidon, Ethylencarbonat oder Propylencarbonat.

Die vorliegende Erfindung soll anhand der nachfolgenden Beispiele näher erläutert werden.

### Allgemeine Arbeitsvorschrift:

Der mehrfunktionelle Alkohol oder die Alkoholmischung, das Carbonat, sowie gegebenfalls andere Monomere, und Kaliumcarbonat als Katalysator (Menge bezogen auf Menge Alkohol in Gew%) wurden nach den Ansatzmengen gemäß Tabelle 1 in einem Dreihalskolben, ausgestattet mit Rührer, Rückflusskühler und Innenthermo-meter vorgelegt, die Mischung auf 140°C erwärmt, und 2 h bei dieser Temperatur gerührt. Mit fortschreitender Reaktionsdauer reduzierte sich dabei die Temperatur des Reaktions-gemisches bedingt durch die einsetzende Siedekühlung des freigesetzten Monoalkohols. Nun wurde der Rückflusskühler gegen einen absteigenden Kühler getauscht, bezogen auf die Äquivalentmenge Katalysator ein Äquivalent Phosphor-säure zugegeben, der Monoalkohol abdestilliert und die Temperatur des Reaktions-gemisches langsam bis auf 160°C erhöht. Der abdestillierte Alkohol wurde in einem gekühlten Rundkolben gesammelt, ausgewogen und der Umsatz so gegenüber dem theoretisch möglichen Vollumsatz prozentual ermittelt (siehe Tabelle 1).
Anschließend wurde bei 160°C über einen Zeitraum von 1 h trockener Stickstoff durch das Reaktionsgemisch geleitet, um noch vorhandene Restmengen von Monomeren zu entfernen. Danach wurde das Reaktionsgemisch auf Raumtemperatur abgekühlt.

Die Produkte wurden entweder pur in die Lackformulierungen gegeben oder aber mit Butylacetat verdünnt. Angaben dazu finden sich in den Tabellen 2, 4 und 5.

**Tabelle 1: Einsatzstoffe und Endprodukte**

| Bsp. Nr. | Alkohol oder Alkoholmischung | Carbonat oder Carbonat + andere Monomere | Molverhältnis Alkohol : Carbonat: ggf. weiterem Monomer | Katalysator, Gew. % bezogen auf Menge Alkohol | Destillat, Alkoholmenge bez. auf Vollumsatz Mol% | Molekulargewicht Produkt (g/mol) Mw Mn | Glasüber gangstemperayur Tg (°C) | OH- Zahl Produkt (mg KOH/g) nach DIN 53240, Teil 2 |
|---|---|---|---|---|---|---|---|---|
| 1 | TMP x 1,2 | DEC | 1:1 | K₂CO₃ | 72 | 2100 | n.b. | 400 |
| | PO | | | 0,15 | | 1450 | | |
| 2 | TMP x 12 | DEC | 1:1 | K₂CO₃ | 70 | 5300 | n.b. | 180 |
| | EO | | | 0,15 | | 2800 | | |
| 3 | TMP x 3 EO | DEC + | 1:0,8 DEC | K₂CO₃ | 78 | 7700 | -20,7 | 275 |
| | | TDME | :0,2 TDME | 0,15 | | 3500 | | - |
| 4 | TMP x 3 EO | DEC + | 1:0,6 DEC | K₂CO₃ | 90 | 4200 | -21,2 | 320 |
| | | TDME | :0,4 TDME | 0,15 | | 2500 | | |
| 5 | TMP x 3 EO | DEC + | 1:0,5 DEC | K₂CO₃ | 90 | 4900 | -22,8 | 296 |
| | | TDME | :0,5 TDME | 0,15 | | 2800 | | |
| 6 | TMP x 1,2 | DEC | 0,8: 0,2:1 | K₂CO₃ | 90 | 4100 | -13,9 | 291 |
| | PO + | | | 0,5 | | 1900 | | |
| | IPDC | | | | | | | |
| | 4:1 molar | | | | | | | |
| 7 | TMP x 1,2 | DEC | 0,6: 0,4:1 | K₂CO₃ | 90 | 4800 | 7,6 | 227 |
| | PO + | | | 0,5 | | 2000 | | |
| | IPDC | | | | | | | |
| | 3:2 molar | | | | | | | |
| 8 | TMP x 1,2 | DEC | 0,5: 0,5:1 | K₂CO₃ | 90 | 3300 | 8,5 | 223 |
| | PO + | | | 0,5 | | 1600 | | |
| | IPDC | | | | | | | |
| | 1:1 molar | | | | | | | |
| 9 | TMP x 3 EO | DEC | 0,8: 0,2:1 | K₂CO₃ | 90 | 10200 | -32,4 | 218 |
| | + | | | 0,4 | | 3200 | | |
| | IPDC | | | | | | | |
| | 4:1 molar | | | | | | | |
| 10 | TMP x 3 EO | DEC | 0,6: 0,4:1 | K₂CO₃ | 82 | 10700 | -18,5 | 175 |
| | + | | | 0,4 | | 3000 | | |
| | IPDC | | | | | | | |
| | 3:2 molar | | | | | | | |
| 11 | TMP x 3 EO | DEC | 0,5: 0,5:1 | K₂CO₃ | 84 | 7500 | -11,7 | 167 |
| | + | | | 0,4 | | 2000 | | |
| | IPDC | | | | | | | |
| | 1:1 molar | | | | | | | |

| | | | | | | | | |
|---|---|---|---|---|---|---|---|---|
| TMP = Trimethylolpropan EO = Ethylenoxid PO = Propylenoxid DEC = Diethylcarbonat TDME = Terephthalsäuredimethylester IPDC = 2,2-Isopropyliden-dicyclohexanol (hydriertes Bisphenol A) | | | | | | | | |

Die Bezeichnung "TMP x 3 EO" beschreibt darin ein Produkt, das je mol Trimethylolpropan mit durchschnittlich 3 mol Ethylenoxid umgesetzt worden ist.
n.b. = nicht bestimmt

Analytik der erfindungsgemäßen Produkte:

Die Polycarbonate wurden per Gelpermeationschromatographie mit einem Refraktometer als Detektor analysiert. Als mobile Phase wurde Dimethylacetamid verwendet, als Standard zur Bestimmung des Molekulargewichts wurde Polymethylmethacrylat (PMMA) eingesetzt.

Die Bestimmung der Glasübergangstemperaturen erfolgte mittels Differential Scanning Calorimetry (DSC), ausgewertet wurde die zweite Aufheizkurve. Die Bestimmung der OH-Zahl erfolgte nach DIN 53240, Teil 2.

### Herstellung der Lacke:

Alle Lackmischungen wurden mit einem stöchiometrischen Verhältnis von Isocyanatgruppen zu Alkoholgruppen (Index 100) bei Raumtemperatur angesetzt. Die Viskosität wurde in Butylacetat auf eine Auslaufzeit von 20 s gemäß ISO 2431 und EN 535 im DIN 4 Becher eingestellt. Die Lacke wurden bei Raumtemperatur mit einem Kastenrakel 180 µm nass auf ein Blech als Substrat aufgerakelt. Die Lackschichtdicke nach Trocknung betrug im Mittel ca. 40 µm.

Als Vergleichsbeispiele wurden Lacke betrachtet, die aus kommerziellen Rohstoffen erhalten wurden.

### Prüfmethoden:

Die Untersuchungen der Lackeigenschaften erfolgten nach 24 Stunden Lagerung der lackierten Bleche in einem Klimaraum bei 23 °C und 50 % relativer Luftfeuchte.

Alle untersuchten Lacke waren nach Aushärtung bei 130 °C klar und transparent.

Nichtflüchiger Anteil (nfA): 1 g der Lackmischung wurde eine Stunde bei 125 °C im Umluftofen getrocknet und das Restgewicht bezogen auf den Anfangswert (=100%) bestimmt.

Auslaufzeit: Gemessen auf Basis von ISO 2431 und EN 535 im DIN 4 Becher bei Raumtemperatur. Angegeben ist die Zeitspanne vom Beginn des Ausfließens bis zum Abreißen des Flüssigkeitsfadens in Sekunden.

Pendeldämpfung nach König in Anzahl Schwingungen auf Grundlage von DIN EN ISO 1522.

Erichsen-Tiefung: Tiefungsprüfung nach DIN EN ISO 1520 in mm Tiefung.

Haftung mit Gitterschnitt nach DIN 53151, die Note 0 bezeichnet die Bestnote, die Note 5 die schlechteste Note. Siehe dazu auch Goldberg und Streitberger, BASF Handbuch Lackiertechnik, Vincentz-Verlag Hannover, 2002, Seite 395.

Aceton-Doppelhub-Test: Mit einem Aceton-getränkten Wattebausch wurde so lang per Hand mit Doppelhüben gerieben bis die Lackschicht bis auf das Blech durchgerieben war. Die Anzahl der dafür nötigen Doppelhübe ist angegeben. Bei hundert Hüben wurde der Versuch abgebrochen.

Etchtest mit 1 %iger Schwefelsäure: Mit einer Pipette wurden 25 µm-Tropfen auf ein Gradientenofenblech gegeben und dieses im Gradientenofen 30 Minuten bei 30-75 °C geheizt. Das Blech wurde danach mit Wasser abgewaschen und getrocknet. Angegeben ist die niedrigste Temperatur bei der mit dem Auge eine Anätzung festzustellen war.

Ergebnis der Lackuntersuchungen bei der Härtungstemperatur 130°C

Allgemein führt der Einsatz der hyperverzweigten Polycarbonate zu einer Erhöhung des nichtflüchtigen Anteils, zu einer Verbesserung der Elastizität bei vergleichbarer Härte und zu einer besseren Haftung im Gitterschnitt, (siehe Tabellen 3, 6 und 7). Weiterhin verbessert sich die Kratzbeständigkeit der Oberfläche und die Beständigkeit der Lacke gegen Chemikalien und gegen Säuren (siehe Tabelle 3).

**Tabelle 2: Einsatzstoffe und Mengen**

| Einsatzstoffe (Gew-Teile) | Beispiel 12 (Vergleich) | Beispiel 13 | Beispiel 14 | Beispiel 15 | Beispiel 16 |
|---|---|---|---|---|---|
| Macrynal^{®} SM636 | 53,7 | 45,0 | 41,9 | 48,8 | 51,5 |
| Polycarbonat aus Beispiel 1 | | 3,5 | | | |
| Polycarbonat aus Beispiel 2 | | | 7,4 | 1,9 | 0,9 |
| Vestanat ® T 1890 L | 32,0 | 35,8 | 33,3 | 34,2 | 33,0 |
| Butylacetat | 41,0 | 37,0 | 36,0 | 38,0 | 38,0 |
| Nichtflüchtiger Anteil (nfA, %) | 47,4 | 49,5 | 50,7 | 48,7 | 48,6 |
| Auslaufzeit (s) | 20 | 20 | 20 | 20 | 20 |

Macrynal® SM 636, Fa. UCB, Polyacrylatpolyol, 70 % in Butylacetat, OH-Zahl ca. 135 mg KOH/g

Vestanat ® T 1890 L: Polyisocyanat der Firma Degussa auf Basis des Isocyanurats von Isophorondiisocyanat, Funktionalität zwischen 3 und 4, 70 %ige Lösung in n-Butylacetat/Solvesso 100 1:2

Basonat® HI 100: Polyisocyanat der Firma BASF auf Basis des Isocyanurats von 1,6-Hexamethylendiisocyanat, Funktionalität zwischen 3 und 4

**Tabelle 3: Produkte aus Tabelle 2, Kennzahlen der Lacke. Die Härtung der Lacke erfolgte über 30 min bei 130°C**

| | Beispiel 12 (Vergleich) | Beispiel 13 | Beispiel 14 | Beispiel 15 | Beispiel 16 |
|---|---|---|---|---|---|
| Schichtdicke (µm) | 36 | 42 | 39 | 43 | 38 |
| Pendeldämpfung | 148 | 148 | 145 | 148 | 150 |
| Erichsentiefung (mm) | 3,0 | 4,0 | 8,5 | 7,9 | 8,5 |
| Gitterschnitt | 5 | 5 | 3 | 5 | 4 |
| Acetontest | >100 | >100 | >100 | >100 | >100 |
| Etching-Test, Prüfung nach 24h | 61 | 62 | n.b. | n.b. | 66 |

**Tabelle 4: Einsatzstoffe und Mengen**

| Einsatzstoffe (Gew-Teile) | Beispiel17 (Vergleich) | Beispiel18 | Beispiel 19 | Beispiel 20 | Beispiel 21 |
|---|---|---|---|---|---|
| Macrynal® SM 636 | 60,0 | 45,0 | 45,0 | 45,0 | 45,0 |
| Polycarbonat aus Beispiel 3 (90% in Butylacetat) | | 5,7 | | | |
| Polycarbonat aus Beispiel 4 (90% in Butylacetat) | | | 4,9 | | |
| Polycarbonat aus Beispiel 5 (90% in Butylacetat) | | | | 5,3 | |
| Polycarbonat aus Beispiel 6 (70% in Butylacetat) | | | | | 7,0 |
| Vestanat ® T 1890 L | 26,5 | 26,5 | 26,5 | 26,5 | 26,5 |
| Basonat® HI 100 | 4,8 | 4,8 | 4,8 | 4,8 | 4,8 |
| Butylacetat | 41,0 | 37,0 | 36,0 | 38,0 | 38,0 |
| Nichtflüchtiger Anteil (nfA, %) | 47,6% | 49,0% | 48,9% | 49,1% | 48,9% |
| Auslaufzeit (s) | 20 | 20 | 20 | 20 | 20 |

**Tabelle 5: Einsatzstoffe und Mengen**

| Einsatzstoffe (Gew-Teile) | Beispiel 22 | Beispiel 23 | Beispiel 24 | Beispiel 25 | Beispiel 26 |
|---|---|---|---|---|---|
| Macrynal® SM 636 | 45,0 | 45,0 | 45,0 | 45,0 | 45,0 |
| Polycarbonat aus Beispiel 7 (70% in Butylacetat) | 8,9 | | | | |
| Polycarbonat aus Beispiel 8 (70% in Butylacetat) | | 9,1 | | | |
| Polycarbonat aus Beispiel 9 (70% in Butylacetat) | | | 9,3 | | |
| Polycarbonat aus Beispiel 10 (70% in Butylacetat) | | | | 11,6 | |
| Polycarbonat aus Beispiel 11 (70% in Butylacetat) | | | | | 12,1 |
| Vestanat® T 1890 L | 26,5 | 26,5 | 26,5 | 26,5 | 26,5 |
| Basonat® HI 100 | 4,8 | 4,8 | 4,8 | 4,8 | 4,8 |
| Butylacetat | 39,5 | 39,5 | 39,5 | 41,0 | 40,5 |
| Nichtflüchtiger Anteil (nfA, %) | 49,0% | 49,0% | 49,1% | 48,9% | 49,1% |
| Auslaufzeit (s) | 20 | 20 | 20 | 20 | 20 |

**Tabelle 6: Produkte aus Tabelle 4, Kennzahlen der Lacke. Die Härtung der Lacke erfolgte über 30 min bei 130°C**

| | Beispiel 17 (Vergleich) | Beispiel18 | Beispiel 19 | Beispiel 20 | Beispiel 21 |
|---|---|---|---|---|---|
| Schichtdicke (µm) | 35 | 39 | 38 | 37 | 35 |
| Pendeldämpfung | 149 | 150 | 150 | 148 | 153 |
| Erichsentiefung (mm) | 5,8 | 6,7 | 6,3 | 6,1 | 6,2 |
| Gitterschnitt | 4 | 3,5 | 1 | 2,5 | 4 |
| Acetontest | >100 | >100 | >100 | >100 | >100 |

**Tabelle 7: Produkte aus Tabelle 5, Kennzahlen der Lacke. Die Härtung der Lacke erfolgte über 30 min bei 130°C, Referenz ist Beispiel 17 aus Tabelle 6**

| | Beispiel 22 | Beispiel 23 | Beispiel 24 | Beispiel 25 | Beispiel 26 |
|---|---|---|---|---|---|
| Schichtdicke (µm) | 39 | 35 | 38 | 36 | 35 |
| Pendeldämpfung | 146 | 151 | 150 | 146 | 152 |
| Erichsentiefung (mm) | 5,9 | 7,1 | 7,5 | 7,3 | 7,6 |
| Gitterschnitt | 4 | 1,5 | 4 | 2,5 | 1 |
| Acetontest | > 100 | > 100 | > 100 | > 100 | > 100 |

## Patentansprüche

1. Verwendung von hochfunktionellen, hoch- oder hyperverzweigten Polycarbonaten, erhältlich durch
a) Herstellung eines oder mehrerer Kondensationsprodukte (K) entweder durch
(a1) Umsetzung mindestens eines organischen Carbonats (A) der allgemeinen Formel RO[(CO)O]ₙR mit mindestens einem aliphatischen, aliphatisch/aromatischen oder aromatischen Alkohol (B1), welcher mindestens 3 OH-Gruppen aufweist, unter Eliminierung von Alkoholen ROH, wobei es sich bei R jeweils unabhängig voreinander um einen geradkettigen oder verzweigten aliphatischen, aromatisch/aliphatischen oder aromatischen Kohlenwasserstoffrest mit 1 bis 20 C-Atomen handelt, und wobei die Reste R auch unter Bildung eines Ringes miteinander verbunden sein können, und n eine ganze Zahl von 1 bis 5 darstellt
oder
(a2) Umsetzung von Phosgen, Diphosgen oder Triphosgen mit dem besagten aliphatischen, aliphatisch/aromatischen oder aromatischen Alkohol (B1) unter Freisetzung von Chlorwasserstoff,
und
b) intermolekulare Umsetzung der Kondensationsprodukte (K) zu einem hochfunktionellen, hoch- oder hyperverzweigten Polycarbonat,
wobei das Mengenverhältnis der OH-Gruppen zu den Phosgenen oder den Carbonaten im Reaktionsgemisch so gewählt wird, dass die Kondensationsprodukte (K) im Mittel entweder eine Carbonat- oder Carbamoylchloridgruppe und mehr als eine OH-Gruppe oder eine OH-Gruppe und mehr als eine Carbonat- oder Carbamoylchloridgruppe aufweisen,
mit einer Glasübergangstemperatur von weniger als 50 °C in Lacken, Überzügen, Klebstoffen, Dichtmassen, Gießelastomeren oder Schaumstoffen, als Fließhilfsmittel, Haftvermittler, Thixotropiermittel oder als Bausteine zur Herstellung von Polyadditions- oder Polykondensationspolymeren sowie als Bestandteil von Bindemitteln.

2. Verwendung gemäß einem der vorstehenden Ansprüche, **dadurch gekennzeichnet, daß** die hochfunktionellen, hoch- oder hyperverzweigten Polycarbonate ein gewichtsmittleres Molgewicht M_{w} zwischen 1.000 und 150.000 aufweisen.

3. Verwendung gemäß einem der vorstehenden Ansprüche, **dadurch gekennzeichnet, daß** die hochfunktionellen, hoch- oder hyperverzweigten Polycarbonate zusätzlich zu dem Alkohol (B1) mindestens einen difunktionellen Alkohol (B2) als Aufbaukomponente aufweisen.

4. Verwendung gemäß Anspruch 3, **dadurch gekennzeichnet, daß** die Menge des oder der Alkohole (B2) 0 bis 39,9 mol % bezüglich der Gesamtmenge aller Alkohole (B1) und (B2) zusammen beträgt.

5. Verwendung gemäß einem der vorstehenden Ansprüche, **dadurch gekennzeichnet, daß** die hochfunktionellen, hoch- oder hyperverzweigten Polycarbonate zusätzlich zu dem Carbonat (A) mindestens eine zweiwertige carbonylreaktive Verbindung (A1) als Aufbaukomponente aufweisen.

6. Beschichtungsmasse, enthaltend mindestens ein hochfunktionelles, hoch- oder hyperverzweigtes Polycarbonat gemäß Anspruch 1 sowie optional weiterhin gegebenenfalls blockierte Isocyanate, Epoxygruppen-enthaltenden Bindemittel oder AIkydharze.

7. Verfahren zum Beschichten von Substrate, **dadurch gekennzeichnet, daß** man eine Beschichtungsmasse gemäß Anspruch 6 auf ein Substrat aufbringt, anschließend zur Entfernung von gegebenenfalls vorhandenem Lösungsmittel trocknet und härtet.
